# EUROPÄISCHE PATENTANMELDUNG

(11) **EP 1 868 364 A1**
(43) Veröffentlichungstag der Anmeldung: **19.12.2007**
(21) Anmeldenummer: 06012261.1
(22) Anmeldetag: 14.06.2006
(51) Int. Cl.: H04M 15/00, H04L 12/14

(54) **Graphische Benutzerschnittstelle zur Anzeige der aktuellen Kosten und der verfügbaren Zeit**

(71) Anmelder: Vodafone Holding GmbH, 40213 Düsseldorf (DE)
(72) Erfinder: Gaida, Klemens, Dr., 40213 Düsseldorf (DE); Cameron, Neill, Sophia-Antipolis 06902 (FR)
(74) Vertreter: Weisbrodt, Bernd

(57) **Zusammenfassung**

Gegenstand der vorliegenden Erfindung ist eine Benutzerschnittstelle (Browser) mit graphischer Benutzeroberfläche (8,GUI) zur Nutzung wenigstens eines Kommunikationsdienstes eines Kommunikationsdienste anbietenden Kommunikationsnetzwerks, mit einer über eine Kommunikationsverbindung mit einem Kommunikationsnetzwerk (Internet) eine Nutzung wenigstens eines Kommunikationsdienstes des Kommunikationsnetzwerks (Internet) ermöglichenden Einrichtung, wenigstens einem über ein Eingabemittel auswählbaren Feld zur Steuerung des Kommunikationsdienstes des Kommunikationsnetzwerks (Internet) und einer graphischen Benutzeroberfläche (8,GUI), welche gekennzeichnet ist durch eine Einrichtung zur Erfassung wenigstens einer Kosteninformation einer Kommunikationsverbindung mit dem Kommunikationsnetzwerk (Internet) während einer Kommunikationsverbindung mit dem Kommunikationsnetzwerk (Internet) und/oder eine Einrichtung zur Erfassung der zeitlichen Dauer einer Kommunikationsverbindung mit dem Kommunikationsnetzwerk (Internet) während einer Kommunikationsverbindung mit dem Kommunikationsnetzwerk (Internet).

## Beschreibung

Die vorliegende Erfindung betrifft ein Verfahren zum Betreiben einer Benutzerschnittstelle mit graphischer Benutzeroberfläche seitens eines Rechners, welcher Mittel zum Zugriff auf ein Kommunikationsdienste anbietendes Kommunikationsnetzwerk aufweist, wobei die Benutzerschnittstelle über eine Kommunikationsverbindung mit dem Kommunikationsnetzwerk eine Nutzung wenigstens eines Kommunikationsdienstes des Kommunikationsnetzwerks ermöglicht und die Benutzerschnittstelle über ein Eingabemittel des Rechners auswählbare Felder erzeugt, die zumindest eine Steuerung des Kommunikationsdienstes des Kommunikationsnetzwerks ermöglichen und die seitens der graphischen Benutzeroberfläche der Benutzerschnittstelle wiedergegeben werden.

Ferner betrifft die vorliegende Erfindung eine Benutzerschnittstelle mit graphischer Benutzeroberfläche zur Nutzung wenigstens eines Kommunikationsdienstes eines Kommunikationsdienste anbietenden Kommunikationsnetzwerks, mit einer über eine Kommunikationsverbindung mit einem Kommunikationsnetzwerk eine Nutzung wenigstens eines Kommunikationsdienstes des Kommunikationsnetzwerks ermöglichenden Einrichtung, einer über ein Eingabemittel auswählbare Felder zur Steuerung des Kommunikationsdienstes des Kommunikationsnetzwerks erzeugenden Einrichtung und einer Einrichtung zur Wiedergabe der erzeugten Felder seitens der graphischen Benutzeroberfläche.

Derartige Benutzerschnittstellen mit graphischer Benutzeroberfläche zur Nutzung wenigstens eines Kommunikationsdienstes eines Kommunikationsdienste anbietenden Kommunikationsnetzwerks als auch Verfahren zum Betreiben derselben sind im Stand der Technik für zahlreiche Anwendungen in verschiedenen Ausgestaltungen bekannt, insbesondere im Zusammenhang mit Menüführungen von in Mobilfunknetzen betreibbaren mobilen Endgeräten in Form von Mobilfunktelefonen oder im Zusammenhang mit dem Internet als Kommunikationsnetzwerk in Form sogenannter Browser. Eine entsprechende Benutzerschnittstelle eines Browsers ist beispielsweise seitens der EP 0 843 269 B1 beschrieben. Als Kommunikationsdienste des Kommunikationsnetzwerks kommen dabei insbesondere Kommunikationsverbindungen des Kommunikationsnetzwerks zum Austausch von Sprache und/oder Daten als Kommunikationsdienste des Kommunikationsnetzwerk über die Kommunikationsverbindung mit dem Kommunikationsnetzwerk in Frage.

Die bisher bekannten Benutzerschnittstellen mit graphischer Benutzeroberfläche zur Nutzung wenigstens eines Kommunikationsdienstes eines Kommunikationsdienste anbietenden Kommunikationsnetzwerks sowie die bisher bekannten Verfahren zum Betrieb derartiger Benutzerschnittstellen sind hinsichtlich der dem Nutzer der Benutzerschnittstellen zur Verfügung stehenden Möglichkeiten einer Kontrolle und/oder Steuerung von Kommunikationsverbindungen mit dem Kommunikationsnetzwerk beschränkt insbesondere hinsichtlich einer Kostenkontrolle.

Der vorliegenden Erfindung liegt in Anbetracht dieses Standes der Technik die Aufgabe zugrunde, Benutzerschnittstellen mit graphischer Benutzeroberfläche zur Nutzung wenigstens eines Kommunikationsdienstes eines Kommunikationsdienste anbietenden Kommunikationsnetzwerks und Verfahren zum Betreiben einer Benutzerschnittstelle mit graphischer Benutzeroberfläche seitens eines Rechners der vorgenannten Art hinsichtlich der dem Nutzer einer entsprechenden Benutzerschnittstelle zur Verfügung stehenden Kontroll- und/oder Steuerungsmöglichkeiten zu verbessern, insbesondere hinsichtlich der Kosten von Kommunikationsverbindungen mit dem Kommunikationsnetzwerk.

Zur technischen Lösung wird mit der vorliegenden Erfindung ein Verfahren zum Betreiben einer Benutzerschnittstelle mit graphischer Benutzeroberfläche seitens eines Rechners, welcher Mittel zum Zugriff auf ein Kommunikationsdienste anbietendes Kommunikationsnetzwerk aufweist, wobei die Benutzerschnittstelle über eine Kommunikationsverbindung mit dem Kommunikationsnetzwerk eine Nutzung wenigstens eines Kommunikationsdienstes des Kommunikationsnetzwerks ermöglicht und die Benutzerschnittstelle über ein Eingabemittel des Rechners auswählbare Felder erzeugt, die zumindest eine Steuerung des Kommunikationsdienstes des Kommunikationsnetzwerks ermöglichen und die seitens der graphischen Benutzeroberfläche der Benutzerschnittstelle wiedergegeben werden, vorgeschlagen, welches dadurch gekennzeichnet ist, dass während einer Kommunikationsverbindung mit dem Kommunikationsnetzwerk wenigstens eine Kosteninformation der Kommunikationsverbindung mit dem Kommunikationsnetzwerk erfasst wird und die wenigstens eine erfasste Kosteninformation seitens eines von der Benutzerschnittstelle erzeugten Feldes der graphischen Benutzeroberfläche der Benutzerschnittstelle wiedergegeben wird.

Der Erfindung liegt die Erkenntnis zugrunde, dass durch Erfassung einer Kosteninformation der Kommunikationsverbindung mit dem Kommunikationsnetzwerk und die Wiedergabe der erfassten Kosteninformation seitens eines von der Benutzerschnittstelle erzeugten Feldes der graphischen Benutzeroberfläche der Benutzerschnittstelle dem Nutzer eine verbesserte Kostenkontrollfunktionalität zur Verfügung gestellt wird.

Zur technischen Lösung der vorgenannten Aufgabe wird mit der vorliegenden Erfindung ferner ein Verfahren zum Betreiben einer Benutzerschnittstelle mit graphischer Benutzeroberfläche seitens eines Rechners, welcher Mittel zum Zugriff auf ein Kommunikationsdienste anbietendes Kommunikationsnetzwerk aufweist, wobei die Benutzerschnittstelle über eine Kommunikationsverbindung mit dem Kommunikationsnetzwerk eine Nutzung wenigstens eines Kommunikationsdienstes des Kommunikationsnetzwerks ermöglicht und die Benutzerschnittstelle über ein Eingabemittel des Rechners auswählbare Felder erzeugt, die zumindest eine Steuerung des Kommunikationsdienstes des Kommunikationsnetzwerks ermöglichen und die seitens der graphischen Benutzeroberfläche der Benutzerschnittstelle wiedergegeben werden, vorgeschlagen, welches dadurch gekennzeichnet ist, dass während einer Kommunikationsverbindung mit dem Kommunikationsnetzwerk die zeitliche Dauer der Kommunikationsverbindung mit dem Kommunikationsnetzwerk erfasst wird, die erfasste zeitliche Dauer der Kommunikationsverbindung mit dem Kommunikationsnetzwerk von einer dem Nutzer der Kommunikationsverbindung mit dem Kommunikationsnetzwerk für Kommunikationsverbindungen mit dem Kommunikationsnetzwerk zur Verfügung stehenden zeitlichen Gesamtdauer subtrahiert wird und die dem Nutzer der Kommunikationsverbindung mit dem Kommunikationsnetzwerk für Kommunikationsverbindungen mit dem Kommunikationsnetzwerk zur Verfügung stehende verbleibende zeitliche Gesamtdauer seitens eines von der Benutzerschnittstelle erzeugten Feldes der graphischen Benutzeroberfläche der Benutzerschnittstelle wiedergegeben wird.

Die Erfindung macht sich dabei die Erkenntnis zunutze, dass eine verbesserte Kostenkontrollfunktionalität durch Erfassung beziehungsweise Bestimmung der einem Nutzer für Kommunikationsverbindungen mit dem Kommunikationsnetzwerk zur Verfügung stehenden zeitlichen Dauern und deren entsprechende Wiedergaben seitens eines von der Benutzerschnittstelle erzeugten Feldes der graphischen Benutzeroberfläche der Benutzerschnittstelle erzielbar ist.

Vorteilhafterweise wird die Kommunikationsverbindung mit dem Kommunikationsnetzwerk mit Erreichen einer dem Nutzer der Kommunikationsverbindung mit dem Kommunikationsnetzwerk verbleibend zur Verfügung stehenden zeitlichen Gesamtdauer einer vorzugsweise vorgebbaren zeitlichen Restdauer abgebrochen. Die Vorgabe der zeitlichen Restdauer kann dabei von dem Nutzer selbst als auch von dem dem Nutzer den Kommunikationsdienst bereitstellenden Anbieter individuell vorgegeben werden. Im Falle einer Vorgabe der zeitlichen Restdauer durch den Anbieter erfolgt diese vorteilhafterweise über eine Kommunikationsverbindung mit dem Kommunikationsnetzwerk. Eine weitere besonders bevorzugte Ausgestaltung der Erfindung ermöglicht den Erwerb von zeitlicher Nutzungsdauer mittels eines Kommunikationsdienstes des Kommunikationsnetzwerks. Durch die Möglichkeit einer nutzerindividuellen Vorgabe der zeitlichen Restdauer ist vorteilhafterweise eine weitere Verbesserung der dem Nutzer zur Verfügung stehenden Kontroll- und/oder Steuerungsmöglichkeiten gegeben, insbesondere da der Nutzer so ein hohes Maß an Kontrolle über die von ihm für die Nutzung von Kommunikationsdiensten gegebene Zeitdauer erhält.

Eine weitere vorteilhafte Ausgestaltung der Erfindung sieht vor, dass das von der Benutzerschnittstelle erzeugte und seitens der graphischen Benutzeroberfläche der Benutzerschnittstelle die erfasste Kosteninformation wiedergebende Feld ein über ein Eingabemittel des Rechners zur Aktivierung wenigstens einer Funktion seitens des Rechners anwählbares Feld ist. Erfindungsgemäß wird so in dem Feld seitens der Benutzeroberfläche der Benutzerschnittstelle nicht nur die erfasste Kosteninformation und/oder die erfasste zeitliche Dauer der Kommunikationsverbindung beziehungsweise die für die Kommunikationsverbindung verbleibend zur Verfügung stehende zeitliche Dauer wiedergegeben, sondern kann dieses Feld auch noch aktiv als Schaltfläche zur Aktivierung einer Funktion seitens des Rechners genutzt werden. Hierdurch wird die Bedienbarkeit für den Nutzer hinsichtlich Steuerungs- und/oder Kontrollfunktionalitäten weiter verbessert. Eine besonders bevorzugte Ausgestaltung der Erfindung sieht vor, dass bei über ein Eingabemittel des Rechners erfolgender Anwahl des Feldes die Kommunikationsverbindung mit dem Kommunikationsnetzwerk abgebrochen oder unterbrochen wird, wobei der Abbruch oder die Unterbrechung bewirkt, dass keine weiteren Kosten für die Kommunikationsverbindung mit dem Kommunikationsnetzwerk anfallen und/oder zur Berechnung gelangen beziehungsweise kommen. Durch diese erfindungsgemäße Ausgestaltung erhält der Nutzer der Benutzerschnittstelle ein größtmögliches Maß an Kontrolle über die Kommunikationsverbindung mit dem Kommunikationsnetzwerk. Erfindungsgemäß wird dabei die Kommunikationsverbindung mit dem Kommunikationsnetzwerk unmittelbar mit Anwahl des Feldes abgebrochen beziehungsweise unterbrochen. In einer weiteren vorteilhaften Ausgestaltung der Erfindung weist die Benutzerschnittstelle bei über ein Eingabemittel des Rechners erfolgender Anwahl des Feldes die Mittel zum Zugriff auf ein Kommunikationsdienste anbietendes Kommunikationsnetzwerk des Rechners an, die Kommunikationsverbindung mit dem Kommunikationsnetzwerk zu beenden.

Erfindungsgemäß erfolgt die Erfassung der wenigstens einen Kosteninformation der Kommunikationsverbindung mit dem Kommunikationsnetzwerk mittels einer Einrichtung zur Erfassung der wenigstens einen Kosteninformation der Kommunikationsverbindung mit dem Kommunikationsnetzwerk der Benutzerschnittstelle.

Eine weitere Ausgestaltung der Erfindung sieht vor, dass die Erfassung der zeitlichen Dauer der Kommunikationsverbindung mit dem Kommunikationsnetzwerk mittels einer Einrichtung zur Erfassung der zeitlichen Dauer der Kommunikationsverbindung mit dem Kommunikationsnetzwerk der Benutzerschnittstelle erfolgt.

Gemäß einer weiteren besonders vorteilhaften Ausgestaltung der Erfindung ist die Benutzerschnittstelle zum Aufrufen, Darstellen und/oder Verwalten von Dateien ausgebildet, vorzugsweise nach Art eines sogenannten Browsers. Vorteilhafterweise ermöglicht die Benutzerschnittstelle dabei über eine Kommunikationsverbindung mit dem Kommunikationsnetzwerk ein Zugriff auf seitens des Kommunikationsnetzwerks bereitgestellte Dateien unter Nutzung wenigstens einer Adressierungsinformation einer Datei im Kommunikationsnetzwerk. Eine bevorzugte Ausgestaltung der Erfindung sieht dabei die Nutzung eines sogenannten URL (URL: Uniform Ressource Locator) als Adressierungsinformation einer Datei im Internet als Kommunikationsnetzwerk vor. In einer weiteren vorteilhaften Ausgestaltung der Erfindung ermöglichen die von der Benutzerschnittstelle erzeugten, über ein Eingabemittel des Rechners zumindest teilweise auswählbaren und/oder aktivierbaren Felder die Eingabe, Ausgabe und/oder Steuerung des Aufrufs, der Darstellung und/oder der Verwaltung von Dateien und/oder Adressierungsinformationen.

Eine besonders bevorzugte Ausgestaltung der Erfindung ist dadurch gekennzeichnet, dass der Rechner ein in einem Mobilfunknetz betreibbares mobiles Endgerät, vorzugsweise in Form eines Mobilfunktelefons, ist und/oder nutzt. Vorteilhafterweise ist dabei die Kommunikationsverbindung eine Mobilfunknetzverbindung, vorzugsweise in einem Mobilfunknetz gemäß einem GSM-, UMTS- und/oder GPRS-Funknetzstandard (GSM: Global System for mobile Communications; UMTS: Universal Mobile Telecommunications System; GPRS: General Packet Radio Service).

Zur technischen Lösung der eingangs genannten Aufgabe wird mit der vorliegenden Erfindung ferner eine Benutzerschnittstelle mit graphischer Benutzeroberfläche zur Nutzung wenigstens eines Kommunikationsdienstes eines Kommunikationsdienste anbietenden Kommunikationsnetzwerks, mit einer über eine Kommunikationsverbindung mit einem Kommunikationsnetzwerk eine Nutzung wenigstens eines Kommunikationsdienstes des Kommunikationsnetzwerks ermöglichenden Einrichtung, wenigstens einem über ein Eingabemittel auswählbaren Feld zur Steuerung des Kommunikationsdienstes des Kommunikationsnetzwerks und einer graphischen Benutzeroberfläche vorgeschlagen, welche gekennzeichnet ist durch eine Einrichtung zur Erfassung wenigstens einer Kosteninformation einer Kommunikationsverbindung mit dem Kommunikationsnetzwerk während einer Kommunikationsverbindung mit dem Kommunikationsnetzwerk und/oder eine Einrichtung zur Erfassung der zeitlichen Dauer einer Kommunikationsverbindung mit dem Kommunikationsnetzwerk während einer Kommunikationsverbindung mit dem Kommunikationsnetzwerk.

Eine vorteilhafte Ausgestaltung der Erfindung ist gekennzeichnet durch eine Einrichtung zur Subtraktion der erfassten zeitlichen Dauer einer Kommunikationsverbindung mit dem Kommunikationsnetzwerk von einer dem Nutzer für Kommunikationsverbindungen mit dem Kommunikationsnetzwerk zur Verfügung stehenden zeitlichen Gesamtdauer.

Eine weitere vorteilhafte Ausgestaltung einer erfindungsgemäßen Benutzerschnittstelle ist gekennzeichnet durch eine Einrichtung zum Abbrechen und/oder Unterbrechen einer Kommunikationsverbindung mit dem Kommunikationsnetzwerk.

Eine bevorzugte Ausgestaltung einer erfindungsgemäßen Benutzerschnittstelle ist zum Aufrufen, Darstellen und/oder Verwalten von Dateien ausgebildet, vorzugsweise nach Art eines sogenannten Browsers. Eine weitere vorteilhafte Ausgestaltung einer erfindungsgemäßen Benutzerschnittstelle ist gekennzeichnet durch eine über eine Kommunikationsverbindung mit dem Kommunikationsnetzwerk einen Zugriff auf Seitens des Kommunikationsnetzwerks bereitgestellte Dateien und unter Nutzung wenigstens einer Adressierungsinformation einer Datei im Kommunikationsnetzwerk ermöglichenden Einrichtung. Eine weitere vorteilhafte Ausgestaltung einer erfindungsgemäßen Benutzerschnittstelle ist dadurch gekennzeichnet, dass zumindest ein Teil der über ein Eingabemittel zumindest teilweise auswählbaren und/oder aktivierbaren Felder ausgebildet ist, die Eingabe, Ausgabe und/oder Steuerung des Aufrufs, der Darstellung und/oder der Verwaltung von Dateien und/oder Adressierungsinformationen zu ermöglichen.

Eine weitere vorteilhafte Ausgestaltung der Erfindung sieht einen Betrieb einer erfindungsgemäßen Benutzerschnittstelle seitens eines Rechners nach einem erfindungsgemäßen Verfahren vor.

Weitere Einzelheiten, Merkmale und Vorteile der Erfindung werden nachfolgend anhand des in der Figur der Zeichnung dargestellten Ausführungsbeispiels näher erläutert. Dabei zeigt:

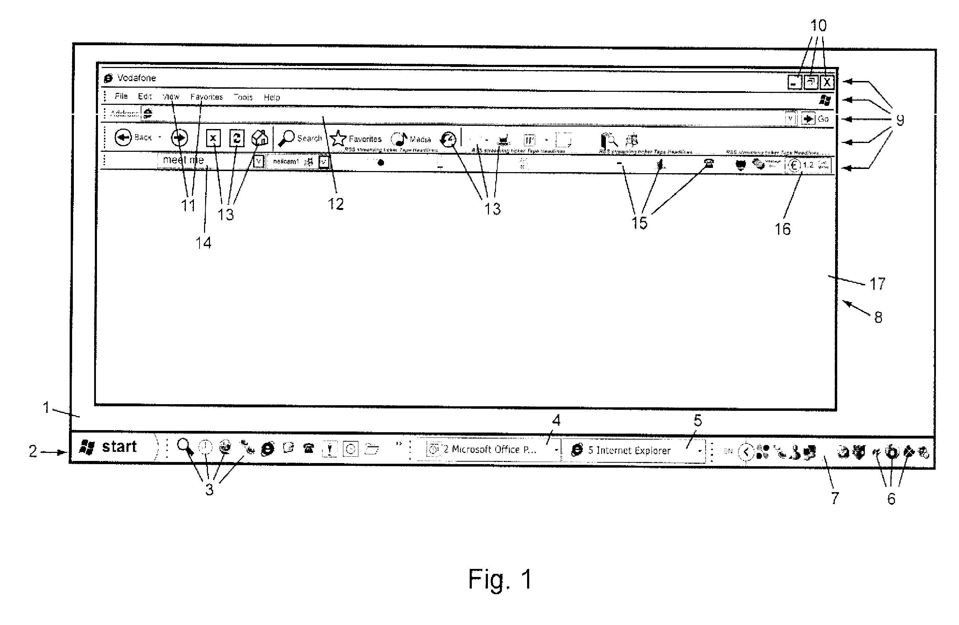

- Fig. 1: in einer schematischen Prinzipdarstellung ein Ausführungsbeispiel einer erfindungsgemäßen Benutzerschnittstelle mit graphischer Benutzeroberfläche zur Nutzung wenigstens eines Kommunikationsdienstes eines Kommunikationsdienste anbietenden Kommunikationsnetzwerk.

Fig. 1 zeigt eine graphische Benutzeroberfläche 1 einer Benutzerschnittstelle eines auf einem Rechner ausgeführten Betriebssystems. Die graphische Benutzeroberfläche wird dabei seitens einer Anzeigeeinrichtung des Rechners wiedergegeben. In einem unteren Bereich der graphischen Benutzeroberfläche sind dabei in einer Funktionsleiste 2 Schalt- und/oder Funktionsflächen 3, 4, 5, 6 und 7 vorhanden, welche zur Steuerung von Funktionalitäten und/oder Anwendungsprogrammen mittels der graphischen Benutzeroberfläche der Benutzerschnittstelle des Betriebssystems dienen.

Die Schaltflächen 3, 6 und 7 sind als auswählbare und/oder aktivierbare Felder ausgebildet, die bei Betätigung über ein Eingabemittel des Rechners, insbesondere einem graphischen Eingabemittel in Form einer sogenannten Maus, entsprechende Anwendungsprogramme und/oder Funktionalitäten derselben aufrufen und seitens der graphischen Benutzeroberfläche wiedergeben.

Die Schalt- und/oder Funktionsflächen 4 und 5 sind als über ein Eingabemittel des Rechners auswählbare Felder ausgebildet. Dabei signalisieren die in der Funktionsleiste 2 wiedergegebenen Felder der Schalt- und/oder Funktionsflächen 4 und 5 in der Funktionsleiste die Ausführung eines entsprechenden Anwendungsprogramms seitens der graphischen Benutzeroberfläche 1 der Benutzerschnittstelle des Betriebssystems. Bei Betätigung der Felder der Schalt- und/oder Funktionsflächen 4 oder 5 durch Auswahl über ein Eingabemittel des Rechners wird dieses dabei als das jeweils aktiv genutzte Anwendungsprogramm in Form eines sogenannten Fensters seitens der graphischen Benutzeroberfläche 1 der Benutzerschnittstelle des Betriebssystems wiedergegeben. Vorliegend wird das über die Schalt- und/oder Funktionsfläche 5 in der Funktionsleiste 2 dargestellte Anwendungsprogramm, vorliegend eine Benutzerschnittstelle mit graphischer Benutzeroberfläche 8 zum Aufrufen, Darstellen und/oder Verwalten von Dateien in einem Fenster 8 aktiv ausgeführt.

Bei der Benutzerschnittstelle mit graphischer Benutzeroberfläche 8 zum Aufrufen, Darstellen und/oder Verwalten von Dateien handelt es sich dabei um einen sogenannten Browser, welcher über eine Kommunikationsverbindung mit dem Internet als Kommunikationsnetzwerk einen Zugriff auf seitens des Internets bereitgestellte Dateien und deren Inhalte ermöglicht. Die Benutzerschnittstelle mit graphischer Benutzeroberfläche 8 zum Aufrufen, Darstellen und/oder Verwalten von Dateien ist dabei als Anwendungsprogramm seitens der graphischen Benutzeroberfläche 1 der Benutzerschnittstellte des Betriebssystems seitens des Rechners ausgeführt. Dabei sind in einem oberen Bereich der graphischen Benutzeroberfläche 8 Funktionsleisten 9 vorgesehen, die verschiedene Schalt-, Funktions- und/oder Eingabeflächen 10, 11, 12, 13, 14, 15 und 16 in Form von zumindest teilweise auswählbaren und/oder aktivierbaren Feldern zur Eingabe, Ausgabe und/oder Steuerung des Aufrufs, der Darstellung und/oder der Verwaltung von Dateien und/oder Adressierungsinformationen aufweisen.

Mittels der Adressierungsinformationen wird dabei über eine Kommunikationsverbindung mit dem Internet als Kommunikationsnetzwerk ein Zugriff auf seitens des Internets bereitgestellte Dateien ermöglicht. Im Zusammenhang mit dem Internet als Kommunikationsnetzwerk werden als Adressierungsinformationen vorliegend einheitliche Ortsangeber für Ressourcen, sogenannte URLs (URL: Uniform Resource Locator), verwendet. Entsprechende Adressierungsinformationen sind seitens der graphischen Benutzeroberfläche 8 seitens der Eingabefläche 12 mittels einer Eingabeeinrichtung des Rechners, in der Regel einer Tastatur, eingebbar.

Die in der Funktionsleiste 9 der graphischen Benutzeroberfläche 8 der Benutzerschnittstelle wiedergegebenen Schaltflächen 10 dienen zur Beeinflussung der Wiedergabe der graphischen Benutzerschnittstelle 8 seitens der Benutzerschnittstelle 1 des Betriebssystems und erlauben zum einen ein Maximieren beziehungsweise Minimieren des Fensters der graphischen Benutzeroberfläche 8 und/oder ein Beenden der Benutzerschnittstelle (Browser).

Die Schaltflächen 13 in der Funktionsleiste 9 der graphischen Benutzeroberfläche 8 der Benutzerschnittstelle zum Aufrufen, Darstellen und/oder Verwalten von Dateien sind als aktivierbare Felder zur Ausführung verschiedener Funktionalitäten und/oder Anwendungen mittels der Benutzerschnittstelle zum Aufrufen, Darstellen und/oder Verwalten von Dateien, welche seitens des Anzeigebereichs 17 der graphischen Benutzeroberfläche 8 der Benutzerschnittstelle wiedergegeben werden.

Die weiter in den Funktionsleisten 9 der graphischen Benutzeroberfläche 8 vorhandenen Schaltflächen 15 sind als auswählbare und/oder aktivierbare Felder zum Aufruf von weitergehenden Anwendungen und/oder Nutzungen der Benutzerschnittstelle mit graphischer Benutzeroberfläche 8 zum Aufrufen, Darstellen und/oder Verwalten von Dateien ausgebildet.

Die Benutzerschnittstelle mit graphischer Benutzeroberfläche 8 weist eine in Fig. 1 nicht explizit dargestellte Einrichtung zur Erfassung wenigstens einer Kosteninformation einer Kommunikationsverbindung mit dem Kommunikationsnetzwerk- vorliegend dem Internet - während einer Kommunikationsverbindung mit selbigem auf. Die mittels der Einrichtung zur Erfassung der Kosteninformation erfasste Kosteninformation wird vorliegend seitens der in der Funktionsleiste 9 wiedergegebenen Schalt- und/oder Funktionsfläche 16, welche in Form eines Mittels eines Eingabemittels des Rechners auswählbares und/oder aktivierbares Feld ausgebildet ist, wiedergegeben. Bei Betätigung der Schalt- und/oder Funktionsfläche 16 der graphischen Benutzeroberfläche 8 ist dabei vorliegend die Kommunikationsverbindung mit dem Kommunikationsnetzwerk (Internet) unterbrechbar beziehungsweise abbrechbar. Dabei werden die Mittel des Rechners zum Zugriff auf das Kommunikationsdienste anbietende Kommunikationsnetzwerk (Internet) direkt angewiesen, die Kommunikationsverbindung mit dem Kommunikationsnetzwerk (Internet) zu beenden. Seitens der Schalt- und/oder Funktionsfläche 16 der graphischen Benutzeroberfläche 8 werden dem Nutzer vorliegend die während und/oder mit der Nutzung einer Kommunikationsverbindung mit dem Internet angefallenen Kosten graphisch signalisiert.

Das in der Figur der Zeichnung dargestellte Ausführungsbeispiel und die im Zusammenhang mit diesen beispielhaften Anwendungsformen dienen lediglich der Erläuterung der Erfindung und sind für diese nicht beschränkend.

### Bezugszeichenliste:

- 1: graphische Benutzeroberfläche (Benutzerschnittstelle (Betriebssystem))
- 2: Funktionsleiste (graphische Benutzeroberfläche (1))
- 3: Schaltfläche (Funktionsleiste (2))
- 4: Schalt- und/oder Funktionsfläche (Funktionsleiste (2))
- 5: Schalt- und/oder Funktionsfläche (Funktionsleiste (2))
- 6: Schaltfläche (Funktionsleiste (2))
- 7: Schalt- und/oder Funktionsfläche (Funktionsleiste (2))
- 8: graphische Benutzeroberfläche/GUI (Benutzerschnittstelle/Browser)
- 9: Funktionsleiste (graphische Benutzeroberfläche (8))
- 10: Schaltfläche (Funktionsleiste (9))
- 11: Funktionsfläche (Funktionsleiste (9))
- 12: Eingabefläche für Adressierungsinformationen (Funktionsleiste (9))
- 13: Schaltfläche (Funktionsleiste (9))
- 14: Schalt- und/oder Funktionsfläche (Funktionsleiste (9))
- 15: Schaltfläche (Funktionsleiste (9))
- 16: Schalt- und/oder Funktionsfläche (Funktionsleiste (9))
- 17: Anzeigebereich (graphische Benutzeroberfläche (8))

## Patentansprüche

1. Verfahren zum Betreiben einer Benutzerschnittstelle (Browser) mit graphischer Benutzeroberfläche (8, GUI) seitens eines Rechners, welcher Mittel zum Zugriff auf ein Kommunikationsdienste anbietendes Kommunikationsnetzwerk (Internet) aufweist,
wobei
die Benutzerschnittstelle (Browser) über eine Kommunikationsverbindung mit dem Kommunikationsnetzwerk (Internet) eine Nutzung wenigstens eines Kommunikationsdienstes des Kommunikationsnetzwerks (Internet) ermöglicht
und
die Benutzerschnittstelle (Browser) über ein Eingabemittel des Rechners auswählbare Felder (10, 11, 12, 13, 14, 15) erzeugt,
die zumindest eine Steuerung des Kommunikationsdienstes des Kommunikationsnetzwerks (Internet) ermöglichen
und
die seitens der graphischen Benutzeroberfläche (8, GUI) der Benutzerschnittstelle (Browser) wiedergegeben werden,
**dadurch gekennzeichnet,**
**dass**
während einer Kommunikationsverbindung mit dem Kommunikationsnetzwerk (Internet) wenigstens eine Kosteninformation der Kommunikationsverbindung mit dem Kommunikationsnetzwerk (Internet) erfasst wird
und
die wenigstens eine erfasste Kosteninformation seitens eines von der Benutzerschnittstelle (Browser) erzeugten Feldes (16) der graphischen Benutzeroberfläche (8, GUI) der Benutzerschnittstelle (Browser) wiedergegeben wird.

2. Verfahren zum Betreiben einer Benutzerschnittstelle (Browser) mit graphischer Benutzeroberfläche (8, GUI) seitens eines Rechners, welcher Mittel zum Zugriff auf ein Kommunikationsdienste anbietendes Kommunikationsnetzwerk (Internet) aufweist,
wobei
die Benutzerschnittstelle (Browser) über eine Kommunikationsverbindung mit dem Kommunikationsnetzwerk (Internet) eine Nutzung wenigstens eines Kommunikationsdienstes des Kommunikationsnetzwerks (Internet) ermöglicht
und
die Benutzerschnittstelle (Browser) über ein Eingabemittel des Rechners auswählbare Felder erzeugt,
die zumindest eine Steuerung des Kommunikationsdienstes des Kommunikationsnetzwerks (Internet) ermöglichen
und
die seitens der graphischen Benutzeroberfläche (8, GUI) der Benutzerschnittstelle (Browser) wiedergegeben werden,
**dadurch gekennzeichnet,**
**dass**
während einer Kommunikationsverbindung mit dem Kommunikationsnetzwerk (Internet) die zeitliche Dauer der Kommunikationsverbindung mit dem Kommunikationsnetzwerk (Internet) erfasst wird,
die erfasste zeitliche Dauer der Kommunikationsverbindung mit dem Kommunikationsnetzwerk (Internet) von einer dem Nutzer der Kommunikationsverbindung mit dem Kommunikationsnetzwerk (Internet) für Kommunikationsverbindungen mit dem Kommunikationsnetzwerk (Internet) zur Verfügung stehenden zeitlichen Gesamtdauer subtrahiert wird
und
die dem Nutzer der Kommunikationsverbindung mit dem Kommunikationsnetzwerk (Internet) für Kommunikationsverbindungen mit dem Kommunikationsnetzwerk (Internet) zur Verfügung stehende verbleibende zeitliche Gesamtdauer seitens eines von der Benutzerschnittstelle (Browser) erzeugten Feldes der graphischen Benutzeroberfläche (8, GUI) der Benutzerschnittstelle (Browser) wiedergegeben wird.

3. Verfahren nach Anspruch 1 oder Anspruch 2, **dadurch gekennzeichnet, dass** das von der Benutzerschnittstelle (Browser) erzeugte und seitens der graphischen Benutzeroberfläche (8, GUI) der Benutzerschnittstelle (Browser) die erfasste Kosteninformation wiedergebende Feld ein über ein Eingabemittel des Rechners zur Aktivierung wenigstens einer Funktion seitens des Rechners anwählbares Feld ist.

4. Verfahren nach Anspruch 3, **dadurch gekennzeichnet, dass** bei über ein Eingabemittel des Rechners erfolgender Anwahl des Feldes die Kommunikationsverbindung mit dem Kommunikationsnetzwerk (Internet) abgebrochen oder unterbrochen wird, wobei der Abbruch oder die Unterbrechung bewirkt, dass keine weiteren Kosten für die Kommunikationsverbindung mit dem Kommunikationsnetzwerk (Internet) anfallen.

5. Verfahren nach Anspruch 4, **dadurch gekennzeichnet, dass** die Benutzerschnittstelle (Browser) bei über ein Eingabemittel des Rechners erfolgender Anwahl des Feldes die Mittel zum Zugriff auf ein Kommunikationsdienste anbietendes Kommunikationsnetzwerk (Internet) des Rechners anweist, die Kommunikationsverbindung mit dem **Kommunikationsnetzwerk** (Internet) zu beenden.

6. Verfahren nach einem der Ansprüche 1 bis 5, **dadurch gekennzeichnet, dass** die Erfassung der wenigstens einen Kosteninformation der Kommunikationsverbindung mit dem Kommunikationsnetzwerk (Internet) mittels einer Einrichtung zur Erfassung der wenigstens einen Kosteninformation der Kommunikationsverbindung mit dem Kommunikationsnetzwerk (Internet) der Benutzerschnittstelle (Browser) erfolgt.

7. Verfahren nach einem der Ansprüche 2 bis 6, **dadurch gekennzeichnet, dass** die Erfassung der zeitlichen Dauer der Kommunikationsverbindung mit dem Kommunikationsnetzwerk (Internet) mittels einer Einrichtung zur Erfassung der zeitlichen Dauer der Kommunikationsverbindung mit dem Kommunikationsnetzwerk (Internet) der Benutzerschnittstelle (Browser) erfolgt.

8. Verfahren nach einem der Ansprüche 1 bis 7, **dadurch gekennzeichnet, dass** der Rechner ein in einem Mobilfunknetz betreibbares mobiles Endgerät ist und/oder nutzt.

9. Benutzerschnittstelle (Browser) mit graphischer Benutzeroberfläche (8, GUI) zur Nutzung wenigstens eines Kommunikationsdienstes eines Kommunikationsdienste anbietenden Kommunikationsnetzwerks,
mit
einer über eine Kommunikationsverbindung mit einem Kommunikationsnetzwerk (Internet) eine Nutzung wenigstens eines Kommunikationsdienstes des Kommunikationsnetzwerks (Internet) ermöglichenden Einrichtung,
wenigstens einem über ein Eingabemittel auswählbaren Feld zur Steuerung des Kommunikationsdienstes des Kommunikationsnetzwerks (Internet)
und
einer graphischen Benutzeroberfläche (GUI),
**gekennzeichnet durch**,
eine Einrichtung zur Erfassung wenigstens einer Kosteninformation einer Kommunikationsverbindung mit dem Kommunikationsnetzwerk (Internet) während einer Kommunikationsverbindung mit dem Kommunikationsnetzwerk (Internet)
und/oder
eine Einrichtung zur Erfassung der zeitlichen Dauer einer Kommunikationsverbindung mit dem Kommunikationsnetzwerk (Internet) während einer Kommunikationsverbindung mit dem Kommunikationsnetzwerk (Internet).

10. Benutzerschnittstelle (Browser) nach Anspruch 9, **gekennzeichnet durch** eine Einrichtung zur Subtraktion der erfassten zeitlichen Dauer einer Kommunikationsverbindung mit dem Kommunikationsnetzwerk (Internet) von einer dem Nutzer für Kommunikationsverbindungen mit dem Kommunikationsnetzwerk (Internet) zur Verfügung stehenden zeitlichen Gesamtdauer.

11. Benutzerschnittstelle (Browser) nach Anspruch 9 oder Anspruch 10, **gekennzeichnet durch** eine Einrichtung zum Abbrechen und/oder Unterbrechen einer Kommunikationsverbindung mit dem Kommunikationsnetzwerk (Internet).

12. Benutzerschnittstelle (Browser) nach einem der Ansprüche 9 bis 11, **gekennzeichnet durch** über ein Eingabemittel zumindest teilweise auswählbare und/oder aktivierbare Felder, von denen zumindest ein Teil ausgebildet ist, die Eingabe, Ausgabe und/oder Steuerung des Aufrufs, der Darstellung und/oder der Verwaltung von Dateien und/oder Adressierungsinformationen (URLs) zu ermöglichen.

13. Benutzerschnittstelle (Browser) nach einem der Ansprüche 9 bis 12, **gekennzeichnet durch** einen Betrieb seitens eines Rechners nach einem Verfahren nach einem der Ansprüche 1 bis 8.
